Europäisches Patentamt

European Patent Office

Office européen des brevets

(11) Publication number: **0 111 920**
**B1**

## (12) EUROPEAN PATENT SPECIFICATION

(45) Date of publication of patent specification: **06.04.88**

(21) Application number: **83112780.8**

(22) Date of filing: **19.12.83**

(51) Int. Cl.⁴: **C 25 B 1/46,** C 25 B 9/00,
C 02 F 1/76

(54) Apparatus and method for the electrolytic production of chlorine water.

(30) Priority: **23.12.82 IT 2493282**

(43) Date of publication of application:
**27.06.84 Bulletin 84/26**

(45) Publication of the grant of the patent:
**06.04.88 Bulletin 88/14**

(84) Designated Contracting States:
**AT BE CH DE FR GB IT LI LU NL SE**

(56) References cited:
**DE-A-2 738 484**
**US-A-1 581 944**
**US-A-2 055 961**
**US-A-4 361 471**

(73) Proprietor: **INDUSTRIE ZANUSSI S.p.A.**
**Via Giardini Cattaneo 3**
**I-33170 Pordenone (IT)**

(72) Inventor: **Bianchi, Giuseppe**
**Piazza Libia 1**
**I-20135 Milano (IT)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to the production of chlorine water and more particularly concerns an apparatus for the preferably intermittent and completely automatizable production of small or medium quantities of chlorine water corresponding to quantities of gaseous chlorine amounting to a few grammes or a few kilogrammes during each cycle of operation.

More specifically, the present invention is directed to the production of chlorine water for small demands encountered for instance in washing machines, sterilization apparatus, drinking water treatment plants and the like.

As generally known, chlorine water is obtained by the absorption of gaseous chlorine in water. The resulting solution is highly instable, so that it has to be used practically at once and is unsuitable for storage or commercialization.

On the other hand, the production of gaseous chlorine has always been, and still is, carried out on an industrial scale in plants of considerable capacity, either for immediate use (production of chlorinized solvents, plastics, chemical intermediate compounds and the like), or for shipment in tanks or cylinders. This system of distribution and commercialization is scarcely applicable to certain uses, for instance in the domestic field, hospital use, in the dairy industry, and in the sanitation and food industry fields.

In these fields, however, use is frequently made of the bleaching, desinfectant and deodorant properties of chlorine, although the supply in cylinders of gaseous chlorine for the in-situ preparation of chlorine water presents practically insurmountable difficulties, due for instance to the necessity of employing skilled personnel for carrying out the process of the absorption of the gaseous chlorine in water, and to the dangers attendant to the handling of gaseous chlorine due to its toxic properties.

In particular, there is a tendency to avoid the transport of gaseous chlorine in cylinders or tanks in view of the dangers and safety risks involved.

These difficulties grow to practical impossibilities in the case of domestic uses requiring only very small quantities and that even at irregular intervals.

For these reasons it was finally unavoidable for such uses to resort to aqueous solutions of sodium hypochlorite, or to solutions obtained by the absorption of gaseous chlorine in an aqueous caustic soda solution subsequently diluted to a content of 5% of active chlorine.

In addition to a reduced specific activity, the sodium hypochloride solution presents other problems due to its causticity and to the emission of irritating and noxious vapours, although the dangers due to toxic properties are considerably smaller as compared to the direct use of gaseous chlorine.

With specific reference to domestic uses, to be discussed hereinafter merely by way of example without intent to limit the scope of the invention thereto, it has already been proposed to provide laundry washing machines, dishwashing machines and the like with electrolytic cells for the in-situ production of gaseous chlorine to be immediately absorbed in water so as to obtain chlorine water for supply to the tub of the respective machine during appropriate phases of the washing cycle.

In particular in DE—A—2738484 an electrolytic cell is disclosed as set forth in the preamble of claim 1 comprising two compartments, an anode compartment and a cathode compartment, respectively, separated from one another by a porous partition or diaphragm so as to obtain a physical separation of the two compartments while maintaining electrolytic communication therebetween, and a container for the absorption of the gaseous chlorine produced, in water.

In the course of the electrolysis of a sufficiently concentrated sodium chloride solution in an electrolytic cell of this type, gaseous chlorine and hydrogen are developed at the anode and cathode, respectively, with a corresponding amount of alkaline substances being set free in the process. If the cathodic and anodic products of the electrolysis are mixed with one another, chlorine and caustic soda react with one another to result in the formation of a sodium hypochloride solution (hypochloride cell) reducing or nullifying the efficiency of the current supplied for the production of gaseous chlorine.

If, therefore, the main object of the electrolysis is the production of gaseous chlorine, it is essential to prevent the electrolysis products from mixing with one another. This mixing may be brought about by two distinct mechanisms:

a) mechanical mixing of the anodic and cathodic solutions,

b) migration of the $CH^-$ ions, corresponding to the cathodic alkalinity, towards the anode under the influence of the electric field, and their combination with the chlorine.

Another considerable problem encountered in electrolytic cells for the production of gaseous chlorine intended for the above indicated uses consists in the formation of incrustations on the electrodes and on the diaphragm separating the anode and cathode compartments. For the production of small or medium quantities of $Cl_2$ it is therefore indispensable to subject the brine, or a solution on the base of sodium chloride, to a preliminary acidification and purification treatment for reducing the concentration of calcium and magnesium salts to a level of a few parts per million. In the water employed for preparing the sodium chloride solution, and thus in the solution itself, calcium and magnesium salts are normally present at a concentration of hundreds or even thousands of parts per million, resulting in their being precipitated out of the cathodic solution onto the cathode and the diaphragm due to the alkalinization accompanying the development of hydrogen.

The precipitation of calcium carbonate and magnesium hydroxide presents an obstacle to the passage of the electric current and interferes with the proper functioning of the electrolytic cell, eventually leading to irreparable damage to the cell due to the resulting excessive rise of its temperature.

The precipitation of these salts particularly affects the porous partition or diaphragm, which may thereby be at least partially obturated on its face directed towards the cathode compartment, resulting in the above indicated inconveniences and problems.

For eliminating these problems, it has in the past been suggested to resort to an operating cycle during which the polarity of the cell is periodically inverted, so that each compartment (and the associated electrode) functions alternately as the anode compartment and the cathode compartment. During the function as the anode compartment, the deposits on the electrode and on the facing side of the diaphragm are returned to the solution.

Although this solution offers certain advantages, it does not really solve the basic problem.

Finally, a further problem encountered in connection with the electrolytic cells under discussion, apart from the problems brought about by the toxic properties of the produced chlorine and capable of being readily solved by the provision of suitable precautions for the conveyance of the chlorine to a water-absorption column, resides in the fact that the combination of the gaseous chlorine produced in the anode compartment and the gaseous hydrogen developed in the cathode compartment results in the formation of an explosive mixture.

The main object of the present invention is the provision of an electrolytic cell for the production of gaseous chlorine and subsequently of chlorine water by absorption of the gaseous chlorine in water, which is useful for satisfying small and medium demands and substantially solves the above indicated problems and which is particularly useful for domestic electro-appliances and operable in an intermittent and fully automatizable manner.

These and other objects are attained according to the invention by an electrolytic cell for the electrolysis of a sodium chloride solution as set forth in the preamble of claim 1 which is characterized in that said electrodes are adapted to be supplied with an electric voltage under the control of a circuit adapted to invert the polarity of the voltage supply to said electrodes according to a predetermined program, that said compartments each include an upper end for the collection respectively of chlorine and hydrogen developed during the electrolysis, said upper end communicating with a common mixing chamber for mixing the gases produced by the electrolysis prior to conveying them to the water-absorption column, said cell being further characterized in that said compartments are in free communication with one another adjacent their lower ends and connected to a common discharge conduit for the rapid discharge of the exhausted solution.

In a modification of the invention, at least a part of the mixture of $H_2$ and $Cl_2$ produced by the electrolysis and collected in the mixing chamber is subjected to conditions causing the named components to react with one another, resulting in the formation of hydrochloric acid to be absorbed together with the gaseous chlorine for obtaining chlorine water in an acidic solution for supply to a consumer at the most suitable time.

The present invention is also useful for applications requiring greater amounts of chlorine water, for instance for the treatment of drinking water. In this case, a battery of the electrolytic cells according to the invention may be employed, each cell being connected to an absorption column, whereby only very small quantities of hydrogen and chlorine are individually mixed with one another, thus maintaining the safety and manageability advantages offered by the present invention.

The specific aspects and advantages of the invention will become more evident from the following description of preferred embodiments with reference to the accompanying drawings, wherein:

Fig. 1 shows a diagrammatic view of an electrolytic cell in a first embodiment of the invention, in combination with apparatus for the absorption of gaseous chlorine in water, and

Fig. 2 shows a view similar to Fig. 1 of a modified embodiment of the present invention.

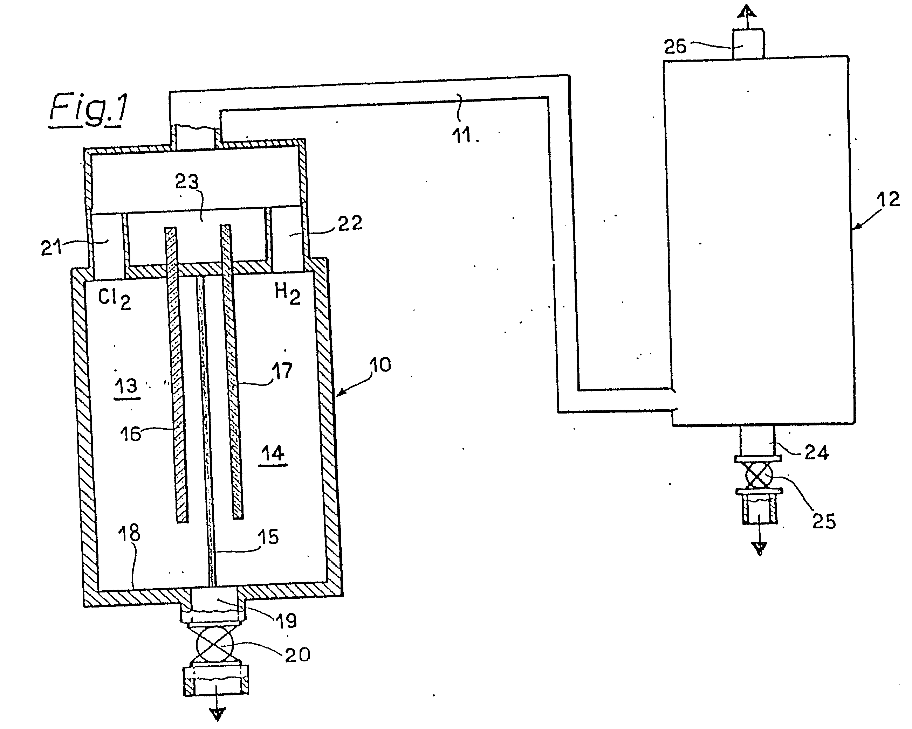

Shown in Fig. 1 is an electrolytic cell 10 connected via a collector manifold 11 to a column 12 for the absorption in water of the gaseous chlorine produced in cell 10.

Cell 10 is divided into two compartments 13 and 14 by a diaphragm 15 of a material generally known in this field of the art and permitting the passage of ions from one compartment to the other.

Mounted within compartments 13 and 14 are electrodes 16 and 17, respectively, of an also generally known construction, preferably formed of impregnated graphite and functioning as anode and cathode, respectively.

In the arrangement of Fig. 1, be it assumed that electrode 16 functions as the anode so that chlorine is developed in compartment 13, while electrode 17 functions at the cathode for developing hydrogen.

The lower end of diaphragm 15 terminates a short distance above the bottom 18 of cell 10 opposite a supply and discharge passage 19 controlled by a valve 20.

Passage 19 is provided for quickly or instantaneously supplying brine to cell 10 and to discharge it therefrom.

Via respective connecting passages 21 and 22, compartments 13 and 14 are in free communication with a mixing chamber 23 in which the chlorine and hydrogen are mixed with one another prior to passing through manifold 11 on their way to absorption column 12.

In a modified embodiment, chamber 23 is disposed immediately adjacent the upper end of cell 10 and connected thereto by a return passage so as to act as a separator for separating foam and liquids entrained by the gasses therefrom and for returning such liquids to the cell.

Column 12 is provided with a discharge outlet 24 controlled by a valve 24 and with a top outlet 26 for the escape, under suitable safety provisions, of the hydrogen not absorbed. Column 12 thus obviously functions as a chlorine water preparation and accumulation unit.

Depending on the appliance for which the cell is intended, control valve 25 will be actuated in synchronism with the operating cycle of the respective appliance, in the case of a washing machine for instance for supplying the chlorine water to the tub of the machine during the appropriate phase of the washing cycle.

The electrolytic cell according to the invention may be connected to a suitable supply source controlled in a manner generally known in this field of the art.

From the above description it appears obvious that the operation of cell 10, and thus the production of gaseous chlorine and subsequently of chlorine water as well as the supply thereof to a washing machine or other appliance may be fully automatized in suitable synchronism with the overall control of the operating cycle, and may at the same time be carried out in a discontinuous manner.

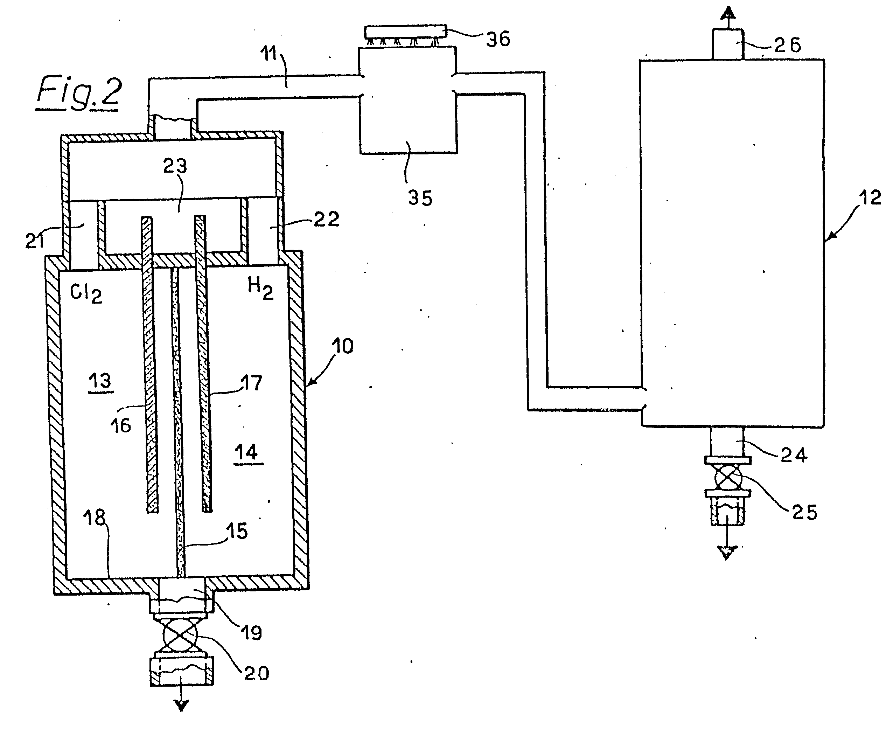

Fig. 2 shows a modification of the embodiment shown in Fig. 1, wherein the collector manifold is provided with an intermediate chamber 35 intended for promoting a preferably partial and controllable reaction of the gaseous chlorine with the hydrogen to result in the formation of hydrochloric acid. This reaction may for instance be brought about by ultraviolet radiation emitted by a suitable irradiation lamp 36 at controlled intensity and/or for a controlled duration. As a consequence, the water contained in column 12 absorbs not only gaseous chlorine but also the acid produced in this manner. This results in the formation of an acidic chlorine solution presenting a much stronger bleaching or sterilizing activity than simple chlorine water.

It is in fact already generally known that in the case for example of sterilization or drinking water treatment, the activity of chlorine water is dependent on the acidity of the medium to which it is supplied. In view of the fact that the water to which the chlorine water is added is normally more or less alkaline, it is obvious that the acidity imparted to the chlorine water in the above described manner may be advantageously made use of for reducing this alkalinity so as to achieve optimum effects.

Merely by way explanation it may be stated that the optimum pH value for this purpose is about 6, while the pH value of tap water is usually about 8.

In addition it is to be noted that the acidity of the chlorine solution obtained by the absorption step may be suitably controlled by limiting the described reaction in a fully automatized manner within the operating cycle of the cell.

A first important aspect of the electrolytic cell according to the invention resides in the fact that the mixing chamber 23 establishes a dynamic equilibrium between the pressures prevailing in the two electrode compartments.

If it is taken into account that during the electrolysis the gases forming on the faces of the electrodes facing towards the porous partition cause considerable agitation of the solutions contained in the two compartments so as to maintain a substantially constant average concentration, it is due to the above noted equilibration of the pressures that the anodic and cathodic solutions are prevented from mixing with one another and from percolating through the porous partition. This aspect basically and substantially distinguishes the cell according to the present invention over conventional cells for the production of soda and chlorine provided with a percolation diaphragm with controllable percolation. The migration of the $OH^-$ ions formed in the cathode compartment under the action of the electric field is controlled, by making use of the mobility of the $HO^-$ ions themselves, by the electric gradient which is stabilized in the solution contained in the cathode compartment.

By operating at first with an initially highly concentrated sodium chloride solution, as different from conventional cells, in which the electrolysis is carried out on sea-water having an average content of about 35 g/l of NaCl, and by limiting the decomposition of the sodium chloride in such a manner that the cathodic solution retains an increased conductivity with modest gradient of the electric potential over the full duration of the electrolysis, it is ensured that the flow of $OH^-$ ions from the cathode compartment to the anode compartment is kept at a relatively low level, and that the efficiency of the current supplied for developing the gaseous chlorine remains at a high level of typically about 85%.

The construction of the cell according to the invention may be modified by any structural and functional equivalents. It is thus possible to vary the specific position of the chamber 23 by locating it within the upper portion of the cell itself or immediately upstream of the absorption column. In the same manner the volumes of the chamber 23 and of the conduit or conduits connecting the cell 10 to the absorption column 12 may be limited to the smallest admissible dimensions for avoiding losses of the gaseous chlorine and controlling eventual explosions of the mixture of $H_2$ and $Cl_2$.

**Claims**

1. An apparatus for the electrolytic production of gaseous chlorine and chlorine water, of the type comprising a cell (10) for the electrolysis of a sodium chloride solution and a column (12) for the absorption of the gaseous chlorine in water, said cell (10) comprising at least two compartments (13, 14) separated by a porous partition (15) and containing respective electrodes (16, 17) disposed therein, characterized in that said electrodes (16, 17) are adapted to be supplied with an electric voltage under a controllable circuit adapted to invert the polarity of the voltage supply according to a predetermined program, that said compartments (13, 14) are in free communication with one another adjacent to their lower ends and are connected to a common discharge conduit (19) for the rapid supply and discharge of the solution to and from the cell (10) and that the upper ends (21, 22) of said compartments (13, 14) collecting the chlorine and hydrogen developed during the electrolysis are connected to a mixing chamber (23) in which said gases are mixed with one another prior to being conveyed to said absorption column (12), so that a dynamically balanced pressure prevails in the two compartments (13, 14).

2. An apparatus according to claim 1, characterized in that said communication of said compartments (13, 14) is provided by said partition (15) terminating above the bottom (18) of said cell (10) opposite to said discharge conduit (19).

3. An apparatus according to claim 1 or 2, characterized in that means (35) are provided for establishing a recombination reaction between the chlorine and hydrogen.

4. An apparatus according to claim 3, characterized in that said means comprise a controllable ultraviolet radiation source (36).

**Patentansprüche**

1. Vorrichtung zur elektrolytischen Herstellung von Chlorgas und Chlorwasser, enthaltend eine Zelle (10) für die Elektrolyse einer Natriumchloridlösung und eine Säule (12) für die Absorption des Chlorgases in Wasser, wobei die Zelle (10) wenigstens zwei Abteile (13, 14) aufweist, die von einer porösen Trennwand (15) voneinander getrennt sind und jeweils Elektroden darin (16, 17) enthalten, dadurch gekennzeichnet, daß die Elektroden (16, 17) dazu eingerichtet sind, mit einer elektrischen Spannung durch eine steuerbare Schaltung versorgt zu werden, die dazu eingerichtet ist, die Polarität der Spannungszuführung entsprechend einem vorbestimmten Programm zu invertieren, daß die Abteile (13, 14) miteinander in der Nähe ihrer unteren Enden in freier Verbindung sind und mit einer gemeinsamen Auslaßleitung (19) für die schnelle Zuführung und Abführung der Lösung zu und von der Zelle (10) verbunden sind, und daß die oberen Enden (21, 22) der genannten Abteile (13, 14), die das Chlor und den Wasserstoff sammeln, die während der Elektrolyse entwickelt werden, mit einer Mischkammer (23) verbunden sind, in der die genannten Gase miteinander vermischt werden, bevor sie der Absorptionssäule (12) zugeführt werden, so daß ein dynamisch ausgeglichener Druck in den zwei Kammern (13, 14) herrscht.

2. Vorrichtung nach Anspruch 1, dadurch gekennzeichnet, daß die Verbindung der genannten Abteile (13, 14) dadurch hergestellt ist, daß die Trennwand (15) über dem Boden (18) der Zelle (10) gegenüber der genannten Auslaßleitung (19 endet.

3. Vorrichtung nach Anspruch 1 oder 2, dadurch gekennzeichnet, daß eine Einrichtung (35) vorgesehen ist, um eine Rekombinationsreaktion zwischen dem Chlor und dem Wasserstoff einzurichten.

4. Vorrichtung nach Anspruch 3, dadurch gekennzeichnet, daß die Einrichtung eine steuerbare Ultraviolett-Strahlungsquelle (36) enthält.

**Revendications**

1. Appareil pour la production électrolytique de chlore gazeux et d'eau de chlore, du type comportant une cellule (10) pour l'électrolyse d'une solution de chlorure de sodium et une colonne (12) pour l'absorption du chlore gazeux dans l'eau, cette cellule (10) comprenant au moins deux compartiments (13, 14) séparés par une cloison poreuse (15) et contenant des électrodes respectives (16, 17) disposées dans ces compartiments, caractérisé en ce que ces électrodes (16, 17) sont adaptées pour être alimentées en tension électrique par un circuit réglable adapté pour inverser la polarité de la tension fournie selon un programme prédéterminé, en ce que ces compartiments (13, 14) communiquent librement l'un avec l'autre au voisinage de leurs extrémités inférieures et sont raccordés à un conduit d'évacuation commun (19) pour la fourniture rapide de la solution à la cellule (10) et pour son évacuation rapide, et en ce que les extrémités supérieures (21, 22) de ces compartiments (13, 14) recueillant le chlore et l'hydrogène dégagés lors de l'électrolyse sont raccordés à une chambre de mélange (23) dans laquelle les gaz sont mélangés l'un avec l'autre avant d'être transférés à la colonne d'absorption (12), de telle sorte qu'une pression dynamiquement équilibrée règne dans les deux compartiments (13, 14).

2. Appareil selon la revendication 1, caractérisé en ce que la communication de ces compartiments (13, 14) est obtenue par le fait que la cloison (15) se termine au-dessus du fond (18) de la cellule (10) en vis-à-vis du conduit d'évacuation (19).

3. Appareil selon la revendication 1 ou la revendication 2, caractérisé en ce que des moyens (35) sont prévus pour établir une réaction de recombinaison entre le chlore et l'hydrogène.

4. Appareil selon la revendication 3, caractérisé en ce que ces moyens comprennent une source réglable de rayonnement ultra-violet (36).

## Fig.1

Cl$_2$    H$_2$

0 111 920

Fig.2